# FASCICULE DE BREVET EUROPEEN

(11) **EP 2 601 064 B1**
(45) Date de publication et mention de la délivrance du brevet: **01.07.2015**
(21) Numéro de dépôt: 11754439.5
(22) Date de dépôt: 18.07.2011
(51) Int. Cl.: B60H 1/00, B60R 1/04, B60S 1/08, B60R 1/00

(54) **AGENCEMENT DE CAPTEURS POUR LA DETECTION D'HUMIDITE D'UN PARE-BRISE DE VEHICULE AUTOMIBILE**
SENSORANORDNUNG ZUR FEUCHTIGKEITSERKENNUNG AUF EINER KRAFTFAHRZEUG-WINDSCHUTZSCHEIBE
SENSOR ARRANGEMENT FOR DETECTING MOISTURE ON A MOTOR-VEHICLE WINDSCREEN

(30) Priorité: 05.08.2010 FR 1056475
(43) Date de publication de la demande: 12.06.2013
(73) Titulaire: Renault S.A.S., 92100 Boulogne-Billancourt (FR)
(72) Inventeur: TALAUCHER, Stéphane, F-78830 Bonnelles (FR); DENIAUD, Nicolas, F-78640 Saint Germain de la Grange (FR)
(86) Numéro de dépôt international: PCT/FR2011/051711
(87) Numéro de publication internationale: WO 2012/017155

(56) Documents cités:
- EP-A1- 1 080 955
- DE-A1- 3 221 612
- DE-A1- 10 325 971
- US-A1- 2008 121 034
- US-B1- 6 422 062

## Description

L'invention concerne un agencement de capteurs pour la détection d'humidité d'un pare-brise de véhicule automobile, tel que divulgué dans EP 1080955 A1.

L'invention concerne plus particulièrement un agencement de capteurs pour la détection d'humidité d'un pare-brise de véhicule automobile, comportant au moins un capteur d'humidité associé à un premier capteur de température, destinés à coopérer pour déterminer un pourcentage massique d'eau dans l'air, qui sont logés dans une coque d'habillage d'un pied d'un rétroviseur central de véhicule automobile, ledit pied étant fixé dans une partie médiane supérieure d'un pare-brise dudit véhicule.

On connaît de nombreux exemples d'agencements de ce type.

Selon une première conception, il est connu de proposer un agencement du type décrit précédemment, dans lequel le capteur d'humidité est logé dans un logement débouchant de manière quelconque dans la surface de la coque d'habillage du pied du rétroviseur.

Cette conception présente l'inconvénient de ne pas permettre au capteur d'humidité de fournir une mesure exacte de l'humidité de l'air à proximité du pare-brise, l'air humide restant localisé à proximité du pare-brise.

Pour remédier à cet inconvénient, on a proposé selon une seconde conception de doter le logement du capteur d'humidité d'un ventilateur destiné à permettre l'aspiration dans le logement de l'air humide provenant du pare-brise.

Cette conception présente l'inconvénient d'être peu silencieuse, et couteuse.

L'invention remédie à cet inconvénient en proposant un agencement dans lequel le capteur d'humidité occupe une position déterminée dans laquelle il est soumis à un flux d'air longeant naturellement la face intérieure du pare-brise, provoqué par exemple par des évents d'aération situés en position basse du pare-brise. L'utilisation de ce flux permet d'éviter d'adjoindre une ventilation au capteur d'humidité.

Dans ce but, l'invention propose un agencement du type décrit précédemment, caractérisé en ce que le capteur d'humidité est agencé dans une première zone avant de la coque, agencée à proximité du pare-brise, une face active dudit capteur étant agencée parallèlement à une première ouverture de la coque sensiblement perpendiculairement au pare-brise, pour permettre à un flux d'air longeant une face intérieure du pare-brise de baigner toute la surface active du capteur d'humidité.

Selon d'autres caractéristiques de l'invention :
- la première ouverture de la coque comporte au moins un élément de filtration, notamment une grille dont le rapport d'une surface fermée à une surface ouverte est au minimum de 2 à 1.
- la surface ouverte de l'élément de filtration de la première ouverture est au minimum de 300 mm²,
- chaque élément d'une grille constituant l'élément de filtration présente au moins une dimension de 15 mm de hauteur et 3 mm de largeur,
- le capteur d'humidité est collé à la face intérieure du pare-brise,
- le premier capteur de température est agencé dans un seconde zone arrière de la coque,
- la seconde zone comporte un logement sensiblement vertical formé dans la coque et elle comporte une seconde ouverture qui débouche dans une paroi sensiblement horizontale inférieure de la coque,
- le second logement débouche dans la coque par l'intermédiaire de la première ouverture,
- l'agencement comporte un second capteur de la température de l'habitacle,
- l'agencement comporte deux capteurs d'humidité agencés transversalement de part et d'autre d'un plan médian de la coque.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en couple d'un agencement selon un état antérieur de la technique,
- la figure 2 est une vue est une vue schématique en coupe d'un agencement selon l'invention,
- la figure 3 est une vue schématique de face de l'élément de filtration de la première ouverture,
- la figure 4 est une vue en perspective d'un mode de réalisation en variante de l'invention.

Dans la description qui va suivre, des chiffres de référence identiques désignent des pièces identiques ou ayant des fonctions similaires.

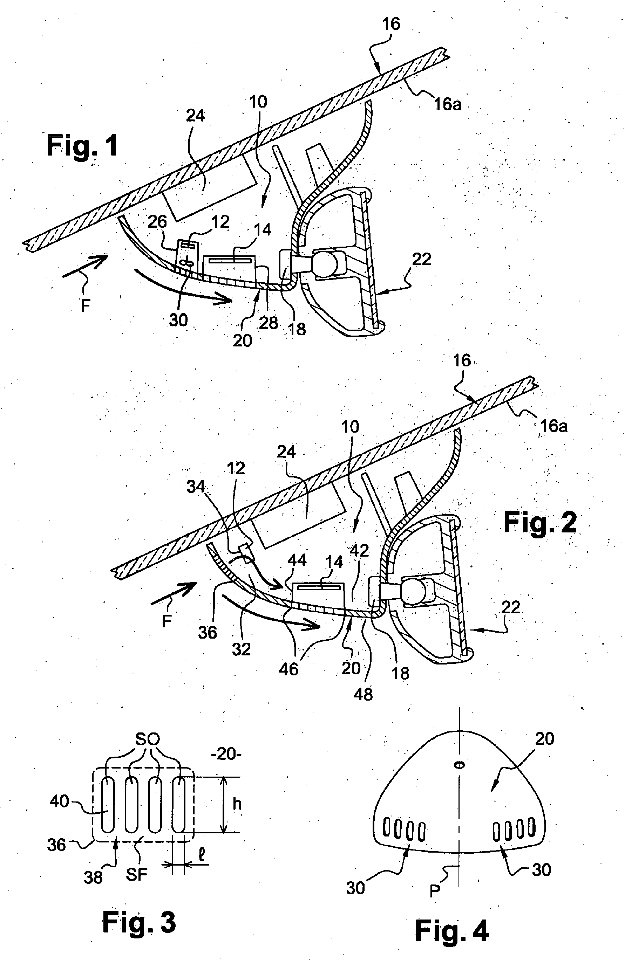

On a représenté à la figure 1 un agencement 10 de capteurs 12, 14 pour la détection d'humidité d'un pare-brise 16 de véhicule automobile.

De manière connue, un tel agencement 10 comporte au moins un capteur d'humidité 12 associé à un premier capteur 14 de température, destinés à coopérer pour déterminer un pourcentage massique d'eau dans l'air, qui sont logés dans une coque d'habillage 20 d'un pied 18 d'un rétroviseur 22 central de véhicule automobile, ledit pied 18 étant fixé dans une partie médiane supérieure du pare-brise 16 dudit véhicule.

La coque d'habillage 20 reçoit par ailleurs de manière classique un ensemble de capteurs 24 optiques de pluie et/ou de luminosité destinés à déclencher l'allumage automatique de projecteurs du véhicule et/ou à déclencher la mise en marche d'essuie-glaces du véhicule.

Conventionnellement, comme l'illustre la figure 1, le capteur d'humidité 12 est agencé dans un logement 26 situé dans une zone quelconque de la coque 20 d'habillage. Le capteur de température 14 est quant à lui agencé dans un logement 28.

Pour permettre au capteur d'humidité 12 d'émettre des informations représentatives de l'humidité du pare-brise, notamment en cas de formation de buée, ce capteur doit être soumis à un flux d'air "F" en provenance directe du pare-brise.

Pour ce faire, un ventilateur 30 est généralement disposé en entrée du logement 26 pour aspirer l'air issu du pare-brise et l'acheminer au capteur 12.

Cette conception présente l'inconvénient de ne pas être silencieuse, le ventilateur 30 pouvant perturber le silence de l'habitacle, et l'inconvénient de renchérir économiquement la conception.

On se retrouve donc généralement face à l'alternative de bénéficier d'une climatisation correctement régulée mais pourvue d'un ventilateur 30 bruyant, ou d'un habitacle silencieux mais dont la climatisation ne peut être efficace, le capteur 12 d'humidité fournissant une information erronée à des moyens de commande de la climatisation.

L'invention remédie à cet inconvénient en plaçant le capteur 12 dans un flux d'air longeant naturellement une face intérieure 16a du pare-brise 16

Dans ce but, l'invention propose un agencement du type décrit précédemment, caractérisé en ce que le capteur 12 d'humidité est agencé dans une première zone avant 32 de la coque 20, agencée à proximité d'une face intérieure 16a du pare-brise 16, une face active 34 dudit capteur 12 étant agencée parallèlement à une première ouverture 36 de la coque 20 et sensiblement perpendiculairement au pare-brise, pour permettre à un flux d'air "F" longeant la face intérieure 16a du pare-brise 1 de baigner toute la surface active 34 du capteur 12 d'humidité.

De préférence, la face active 34 du capteur 12 est agencée à une distance de la coque 20 comprise entre 5 et 20 mm, ce qui permet vu le débit habituel du flux d'air F, d'impacter toute la surface active 34 du capteur 12 d'humidité.

Dans le mode de réalisation préféré de l'invention, comme l'illustre la vue de détail de la figure 3, la première ouverture 36 de la coque 20 comporte au moins un élément de filtration 38 constitué d'une grille, notamment une grille dont le rapport d'une surface fermée "SF" à une surface ouverte "SO" est au minimum de 2 à 1.

Par ailleurs, de préférence on dimensionnera la surface ouverte "SO" de l'élément de filtration 38 de la première ouverture de manière qu'elle présente une surface au minimum de 300 mm².

Enfin, les résultats optimaux seront obtenus lorsque chacun des éléments 40 formant la grille présente au moins une dimension "h" de 15 mm de hauteur et une dimension "l" de 3 mm de largeur.

De manière connue, le capteur d'humidité 12 est maintenu dans la coque 20 par exemple par l'intermédiaire de pattes de fixation (non représentées).

En variante, le capteur d'humidité 12 pourrait être collé à la face intérieure 16a du pare-brise 16.

Par ailleurs, le premier capteur 14 de température est agencé dans une seconde zone arrière 42 de la coque 20.

A cet effet, la seconde zone 42 comporte par exemple un second logement 44 sensiblement vertical formé dans la coque 20.

Selon un premier mode de réalisation qui a été représentée à la figure 2, la seconde zone 42 peut comporter à cet effet une seconde ouverture 46 qui débouche dans une paroi 48 sensiblement horizontale inférieure de la coque 20.

En variante, non représentée, si la seconde zone 42 est assez proche de la première zone 32, le second logement 44 peut déboucher dans la coque 20 par l'intermédiaire de la première ouverture 36.

La coque 20 ne comporte alors qu'une seule ouverture 36.

Par ailleurs, selon une variante qui a été représentée à la figure 4, l'agencement 10 comporte deux capteurs d'humidité 12 agencés transversalement de part et d'autre d'un plan médian "P" de la coque 20. La coque 20 comporte donc à cet effet deux ouvertures 36, comme représenté à la figure 4.

Enfin, on notera que conventionnellement, l'agencement 10 comporte un second capteur (non représenté) de la température de l'habitacle, qui est spécifiquement destiné à assurer la régulation de la température de confort de l'habitacle.

L'invention propose donc un agencement de capteurs 12, 14 à même d'assurer une détermination de l'humidité massique de l'air du pare-brise 16, et d'émettre cette information à l'intention de moyens de commande de la climatisation, pour assurer un désembuage efficace du pare-brise.

## Revendications

1. Agencement (10) de capteurs pour la détection d'humidité d'un pare-brise (16) de véhicule automobile, comportant au moins un capteur (12) d'humidité associé à un premier capteur (14) de température, destinés à coopérer pour déterminer un pourcentage massique d'eau dans l'air, qui sont logés dans une coque (20) d'habillage d'un pied (18) d'un rétroviseur (22) central de véhicule automobile, ledit pied(18) étant fixé dans une partie médiane supérieure d'un pare-brise (16) dudit véhicule,
**caractérisé en ce que** le capteur d'humidité (12) est agencé dans une première zone avant (32) de la coque (20), agencée à proximité du pare-brise (16), une face active (34) dudit capteur (12) étant agencée parallèlement à une première ouverture (36) de la coque sensiblement perpendiculairement au pare-brise, pour permettre à un flux d'air longeant une face intérieure du pare-brise de baigner toute la surface active du capteur d'humidité.

2. Agencement (10) selon la revendication précédente, **caractérisé en ce que** la première ouverture (36) de la coque (12) comporte au moins un élément (38) de filtration, notamment une grille dont le rapport d'une surface fermée (SF) à une surface ouverte (SO) est au minimum de 2 à 1.

3. Agencement (10) selon l'une des revendications précédentes, **caractérisé en ce que** chaque élément (40) d'une grille constituant l'élément (38) de filtration présente au moins une dimension de 15 mm de hauteur et 3 mm de largeur.

4. Agencement (10) selon la revendication précédente, **caractérisé en ce que** le capteur d'humidité (12) est collé à la face intérieure (16a) du pare-brise (16).

5. Agencement (10) selon l'une des revendications précédentes, **caractérisé en ce que** le premier capteur (14) de température est agencé dans un seconde zone arrière (42) de la coque (12).

6. Agencement (10) selon la revendication précédente, **caractérisé en ce que** la seconde zone (42) comporte un second logement (44) sensiblement vertical formé dans la coque (12) et **en ce qu'**elle comporte une seconde ouverture (46) qui débouche dans une paroi (48) sensiblement horizontale inférieure de la coque.

7. Agencement (10) selon la revendication 6, **caractérisé en ce que** le second logement (44) débouche dans la coque (12) par l'intermédiaire de la première ouverture (30).

8. Agencement (10) selon l'une des revendications précédentes, **caractérisé en ce qu'**il comporte un second capteur de la température de l'habitacle.

9. Agencement (10) selon l'une des revendications précédentes, **caractérisé en ce qu'**il comporte deux capteurs d'humidité (12) agencés transversalement de part et d'autre d'un plan médian de la coque.

## Patentansprüche

1. Anordnung (10) von Sensoren zur Erfassung von Feuchtigkeit einer Kraftfahrzeug-Windschutzscheibe (16), die mindestens einen Feuchtesensor (12) in Verbindung mit einem ersten Temperatursensor (14) aufweist, die dazu bestimmt sind, zusammenzuwirken, um einen Masseprozentsatz von Wasser in der Luft zu bestimmen, die in einer Verkleidungsschale (20) eines Fußes (18) eines Kraftfahrzeug-Innenrückspiegels (22) untergebracht sind, wobei der Fuß (18) in einem oberen Mittelteil einer Windschutzscheibe (16) des Fahrzeugs befestigt ist,
**dadurch gekennzeichnet, dass** der Feuchtesensor (12) in einem ersten vorderen Bereich (32) der Schale (20) angeordnet ist, der in der Nähe der Windschutzscheibe (16) angeordnet ist, wobei eine aktive Seite (34) des Sensors (12) parallel zu einer ersten Öffnung (36) der Schale im Wesentlichen lotrecht zur Windschutzscheibe angeordnet ist, um es einem an einer Innenseite der Windschutzscheibe entlang streifenden Luftstrom zu ermöglichen, die ganze aktive Seite des Feuchtesensors zu umspülen.

2. Anordnung (10) nach dem vorhergehenden Anspruch, **dadurch gekennzeichnet, dass** die erste Öffnung (36) der Schale (20) mindestens ein Filterelement (38) aufweist, insbesondere ein Gitter, bei dem das Verhältnis zwischen einer geschlossenen Fläche (SF) und einer offenen Fläche (SO) mindestens 2 zu 1 beträgt.

3. Anordnung (10) nach einem der vorhergehenden Ansprüche, **dadurch gekennzeichnet, dass** jedes Element (40) eines das Filterelement (38) bildenden Gitters mindestens eine Abmessung von 15 mm in der Höhe und 3 mm in der Breite aufweist.

4. Anordnung (10) nach dem vorhergehenden Anspruch, **dadurch gekennzeichnet, dass** der Feuchtesensor (12) an die Innenseite (16a) der Windschutzscheibe (16) geklebt ist.

5. Anordnung (10) nach einem der vorhergehenden Ansprüche, **dadurch gekennzeichnet, dass** der erste Temperatursensor (14) in einem zweiten hinteren Bereich (42) der Schale (20) angeordnet ist.

6. Anordnung (10) nach dem vorhergehenden Anspruch, **dadurch gekennzeichnet, dass** der zweite Bereich (42) eine zweite im Wesentlichen senkrechte Aufnahme (44) aufweist, die in der Schale (20) geformt ist, und dass er eine zweite Öffnung (46) aufweist, die in einer im Wesentlichen waagrechten unteren Wand (48) der Schale mündet.

7. Anordnung (10) nach Anspruch 6, **dadurch gekennzeichnet, dass** die zweite Aufnahme (44) mittels der ersten Öffnung (30) in die Schale (20) mündet.

8. Anordnung (10) nach einem der vorhergehenden Ansprüche, **dadurch gekennzeichnet, dass** sie einen zweiten Sensor der Temperatur des Innenraums aufweist.

9. Anordnung (10) nach einem der vorhergehenden Ansprüche, **dadurch gekennzeichnet, dass** sie zwei Feuchtesensoren (12) aufweist, die quer zu beiden Seiten einer Mittelebene der Schale angeordnet sind.

## Claims

1. Sensor arrangement (10) for detecting moisture on a motor vehicle windscreen (16), comprising at least one moisture sensor (12) linked to a first temperature sensor (14), designed to cooperate in order to determine a percentage by mass of water in the air, which sensors are housed in a shell (20) of the trim of a foot (18) of a central rear-view mirror (22) of a motor vehicle, said foot (18) being attached in a middle upper portion of a windscreen (16) of said vehicle,
**characterized in that** the moisture sensor (12) is arranged in a first front region (32) of the shell (20), arranged close to the windscreen (16), an active face (34) of said sensor (12) being arranged parallel to a first opening (36) of the shell essentially perpendicular to the windscreen, so as to allow a flow of air along an inner face of the windscreen to cover the entire active surface of the moisture sensor.

2. Arrangement (10) according to the preceding claim, **characterized in that** the first opening (36) of the shell (20) comprises at least one filtering element (38), in particular a grille whose ratio of closed surface (SF) to open surface (SO) is at least 2:1.

3. Arrangement (10) according to either of the preceding claims, **characterized in that** each element (40) of a grille constituting the filtering element (38) is at least 15 mm high and 3 mm wide.

4. Arrangement (10) according to the preceding claim, **characterized in that** the moisture sensor (12) is adhesively bonded to the inner face (16a) of the windscreen (16).

5. Arrangement (10) according to one of the preceding claims, **characterized in that** the first temperature sensor (14) is arranged in a second rear zone (42) of the shell (20).

6. Arrangement (10) according to the preceding claim, **characterized in that** the second region (42) comprises a second, essentially vertical recess (44) formed in the shell (20) and **in that** it comprises a second opening (46) which opens in a lower, essentially horizontal wall (48) of the shell.

7. Arrangement (10) according to Claim 6, **characterized in that** the second recess (44) opens in the shell (20) via the intermediary of the first opening (30).

8. Arrangement (10) according to one of the preceding claims, **characterized in that** it comprises a second sensor for the temperature of the passenger compartment.

9. Arrangement (10) according to one of the preceding claims, **characterized in that** it comprises two moisture sensors (12) arranged transversely on either side of a median plane of the shell.
